# EUROPÄISCHE PATENTSCHRIFT

(11) **EP 1 098 560 B1**
(45) Veröffentlichungstag und Bekanntmachung des Hinweises auf die Patenterteilung: **28.08.2002**
(21) Anmeldenummer: 99932762.0
(22) Anmeldetag: 30.06.1999
(51) Int. Cl.: A01G 3/02

(54) **SCHEREN-VERRIEGELUNGSVORRICHTUNG**
LOCKING DEVICE FOR PRUNING SHEARS
DISPOSITIF DE VERROUILLAGE POUR SECATEUR

(30) Priorität: 22.07.1998 DE 19832896
(43) Veröffentlichungstag der Anmeldung: 16.05.2001
(73) Patentinhaber: Wolf-Garten GmbH & Co. KG, 57518 Betzdorf (DE)
(72) Erfinder: SCHNEIDER, Manfred, D-66606 St. Wendel, Bubach (DE); STAUDT, Gerhard, D-66839 Schmelz (DE)
(74) Vertreter: Koch, Günther, Dipl.-Ing.
(86) Internationale Anmeldenummer: EP9904523
(87) Internationale Veröffentlichungsnummer: WO00004759

(56) Entgegenhaltungen:
- DE-U- 8 525 568
- DE-U- 9 110 672
- DE-U- 9 110 772
- GB-A- 1 543 657
- GB-A- 2 210 821

## Beschreibung

Die Erfindung betrifft eine Verriegelungsvorrichtung für Gartenscheren mit einem durch Hand betätigbaren Schiebeknopf und einer von diesem betätigbaren Zuhaltung, die die Scherenschenkel in Schließstellung entgegen der Kraft einer Öffnungsfeder sperrt.

Derartige Verriegelungen dienen allgemein dazu, die Scheren bei Nichtgebrauch gegen ein unbeabsichtigtes Öffnen zu schützen und eine Verletzungsgefahr weitgehend zu vermeiden. Der geringere Raumbedarf im geschlossenen Zustand erleichtert die Handhabung, die Ablage und den Transport. Die Verriegelungsstellung ist gleichzeitig die Bereitschaftsstellung, in der die Scherengriffe bequem mit einer Hand erfaßt werden können, um nach Lösen der Sperre, was mit der gleichen Hand bewirkt werden sollte, die Schere zum Schneiden bereitzuhalten.

Diese Forderungen sind im allgemeinen dann erfüllt, wenn im geschlossen Zustand die beiden Spitzen der Scherenschenkel aneinanderliegen und die Griffschalen einhändig bequem umschlossen werden können.

Die an moderne Gartenscheren zu stellenden Forderungen bezüglich der Verriegelungsvorrichtung gehen jedoch noch weiter. Bei den Amboßscheren, bei denen die Schneidkante eines Schneidmessers mit einem Amboß des anderen Scherenschenkels zusammenwirkt, besteht die Forderung, daß die Schneidkante dem Amboß lichtspaltfrei anliegt. Fertigungstechnisch bedingte Toleranzen, aber auch ein sich während des Gebrauchs einstellender Verschleiß der Schere führen häufig dazu, daß sich in der Schließstellung ein paralleler oder keilförmiger Lichtspalt zeigt, was die Schneidleistung der Schere nicht notwendigerweise beeinträchtigen muß, aber vom Benutzer der Schere häufig als Mangel angesehen wird.

Es ist bekannt, bei der Fertigung oder einer eventuellen Reparatur die relative Stellung des Ambosses zur Schneidkante zu verstellen. Dies bedingt jedoch, daß die Schere etwas mehr oder weniger geschlossen werden muß, damit Messer und Amboß auf ihrer gesamten Länge aufliegen. Die üblichen Scherenverriegelungen mit Zuhaltungen, die auf eine ganz bestimmte Einrastposition fixiert sind, können ein derartiges lichtspaltfreies Schließen nicht gewährleisten.

Dieses Problem der "Lichtspaltvermeidung" tritt zwar bei zweischneidigen Scheren nicht auf, jedoch kann auch bei diesen ein unerwünschtes Speil auftreten, wenn zu große Maß-Toleranzen in den Scherenpuffern liegen oder diese nicht genügend einfedern können (Toleranzstreuung in der SHORE-Härte).

Die genannten Probleme treten vornehmlich bei Gartenscheren 5 auf, sie können sich jedoch auch bei anders gearteten Scheren zeigen, die durch Federkraft in die Öffnungsstellung überführt werden, und deshalb soll die Erfindung auch Scheren anderer vergleichbarer Art umfassen.

0 Das DE 11 06 72 U zeigt eine gattungsgemäße Verriegelungsvorrichtung für Gartenscheren gemäß der Präambel des Patentanspruchs 1. Hierbei ist zwischen einem Betätigungsglied und der Zuhaltung ein Verbindungselement angeordnet, dessen Wirkrichtung von einer Betätigungsrichtung von Betätigungsglied und/oder Zuhaltung abweicht. Dadurch soll durch ergonometrisch günstige Anordnung eines Bedienungselementes eine leichte Betätigung gewährleistet werden. Ein Toleranzausgleich und eine Nachstellung bei Verschleiß ist hierbei nicht vorgesehen.

Der Erfindung liegt die Aufgabe zugrunde, eine Scheren-Verriegelungsvorrichtung zu schaffen, die ein vollständiges Schließen auch nach längerem Gebrauch gewährleistet.

Gelöst wird die gestellte Aufgabe durch die im Kennzeichnungsteil des Patentanspruchs 1 angegebenen Merkmale.

Durch die Erfindung wird erreicht, daß, unabhängig von Fertigungstoleranzen und im Betrieb auftretendem Verschleiß, die Schere durch die Verriegelungsvorrichtung immer im voll geschlossenen Zustand verriegelt werden kann, d.h. bei einer Amboßschere wird stets eine lichtspaltfreie Verriegelung gewährleistet und bei einer zweischneidigen Schere können die Messerspitzen immer optisch genau ausgerichtet in die Schließstellung überführt sein. Die Anordnung ist dabei zweckmäßigerweise so getroffen, daß ein an einem Scherenschenkel schwenkbar gelagertes Zuhaltungsblech mit einer Rastausnehmung oder einer Rastnockenfläche des anderen Scherenschenkels zusammenwirkt. Die zusammenwirkenden Nockenflächen sind dabei so beschaffen, daß im Schließbereich noch vor Erreichen der Endstellung eine Selbsthemmung eintritt und eine weitere Verschwenkung des Zuhaltungsbleches die Scherenschenkel kontinuierlich in die Endstellung überführt.

Die Verschwenkurg des Zuhaltungsbleches kann durch einen über die Griff schale vorstehenden Ansatz erfolgen. Dies würde jedoch eine unbequeme Handhabung zur Folge haben. Aus ergonometrischen Gründen soll daher gemäß einer weiteren Ausgestaltung der Erfindung ein Schiebeknopf vorgesehen werden, der statt eine Rotationsbewegung durchzuführen eine Linearbewegung auf der Außenseite der Griffschale des einen Scherenschenkels beschreibt. Dieser Schiebeknopf ist gemäß dem bevorzugten Ausführungsbeispiel der Erfindung so angeordnet, daß er einhändig mit dem Daumen der die Schere erfassenden rechten oder linken Hand betätigt werden kann. Die Verbindung zwischen Zuhaltungsblech und Schiebeknopf erfolgt durch einen in einem Loch des Zuhaltungsbleches reibungsschlüssig festgelegten Stift, der in eine Langlochkulisse des Schiebeknopfes derart eingreift, daß die Hubbewegung des Stiftes aufgenommen wird. Der Schiebeknopf kann in einer Führungsbahn in der Griffschale formschlüssig geführt sein. Dadurch wird ein Zwischenraum zwischen Knopf und Führungsbahn vermieden, der leicht verschmutzen könnte, was wiederum zu einem Klemmen des Zuhaltemechanismus führen könnte.

Die Festlegung des Schiebeknopfes in der jeweiligen Schließstellung der Schere kann reibungsschlüssig erfolgen, wobei die Selbsthemmung der Verriegelungsglieder ein ungewolltes Öffnen unter der Wirkung der Öffnungsfeder ausschließt. Gemäß einer bevorzugten Ausführung der Erfindung ist jedoch ein Rastmechanismus in Form einer Feinraststruktur vorgesehen, wodurch der Schiebeknopf gegenüber der ihn führenden Griffschale in definierten feingerasteten Stellungen fixierbar ist. Die Rastung ist federnd ausgebildet, so daß immer eine Einrastung in der Endstellung gewährleistet werden kann.

Nachstehend wird ein Ausführungsbeispiel der Erfindung anhand der Zeichnung beschrieben. In der Zeichnung zeigen:
Fig. 1 zeigt eine Ansicht einer mit einer erfindungsgemäßen Verriegelungsvorrichtung ausgerüsteten Amboßschere im geschlossenen Zustand,
Fig. 2 zeigt eine Ansicht der in Fig. 1 dargestellten Schere in geöffneter Stellung,
Die Figuren 3 und 4 zeigen die am Scherenblatt angreifende Zuhaltung, und zwar in Fig. 3 in voll geschlossener Stellung und in Fig. 4 in einer Stellung kurz vor Erreichen der Schließstellung,
Fig. 5 zeigt die geometrische Grundlage des Zusammenwirkens von Schiebeknopf (mit Kulisse) und Zuhaltungsblech (mit Kulissenstift),
Figur 6 und 7 zeigen das Zusammenwirken von Schiebeknopf und Zuhaltungsblech,
Fig. 8 zeigt die Anordnung von Schiebeknopf und Zuhaltung,
Fig. 9 ist ein Schnitt nach der Linie A-A gemäß Fig. 8,
Fig. 10 zeigt eine Anordnung definierter Raststellungen.

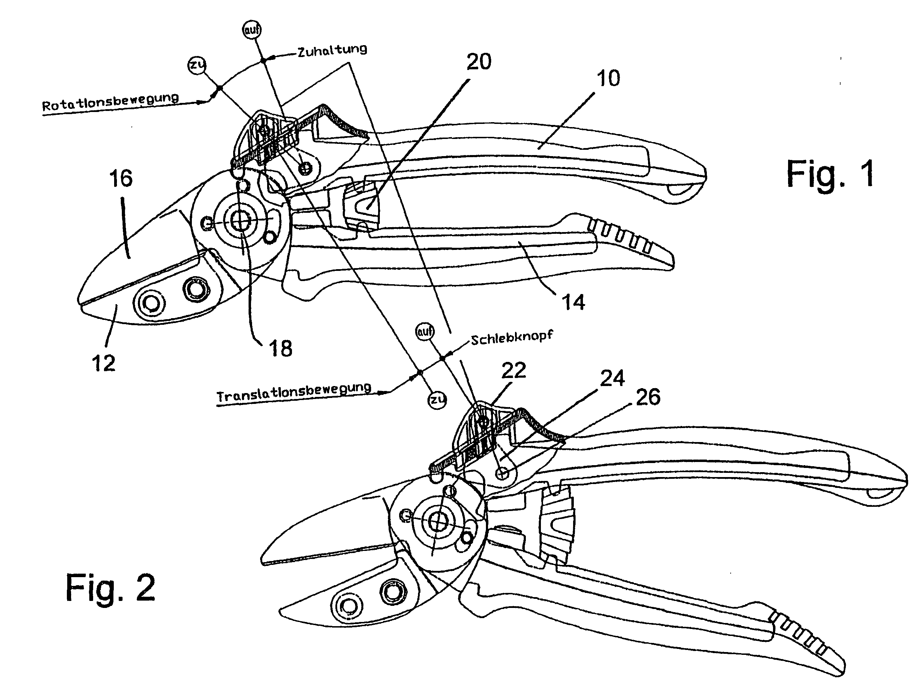

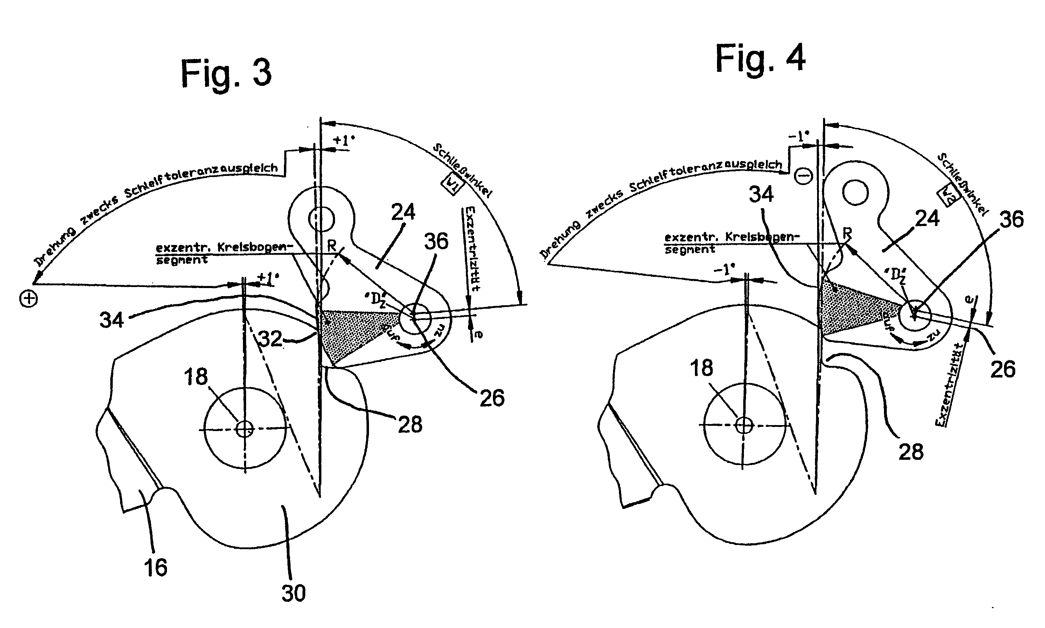

Die in den Figuren 1 und 2 dargestellte Amboßschere weist einen ersten Scherenschenkel 10 mit einem daran verstellbar angeordneten Amboß 12 und einen zweiten Scherenschenkel 14 mit einem mit dem Amboß zusammenwirkenden Messer 16 auf. Die beiden Scherenschenkel 10 und 14 sind über einen Gelenkbolzen 18 miteinander verbunden. Eine zwischen den Schenkeln 10 und 14 angeordnete Öffnungsfeder 20 sucht die Schenkel 10 und 14 zu spreizen. Durch eine im folgenden im einzelnen beschriebene Verriegelungsvorrichtung wird die Schere entgegen der Kraft der Öffnungsfeder 20 in Schließstellung gehalten. Diese Verriegelungsvorrichtung weist einen Schiebeknopf 22 auf, der ein Zuhaltungsblech 24 um eine Achse 26 verschwenkt. Dieses Zuhaltungsblech wirkt mit einer Einrast-Aussparung 28 im Messer 16 zusammen, wie dies am besten aus Fig. 3 und 4 erkennbar ist. Das Messer 16 ist mit seinem rückwärtigen Teil 30 auf dem Gelenkbolzen 18 gelagert und dieser Teil 30 ist mit dem Vorderabschnitt des Scherenschenkels 14 vernietet. Dieser Teil 30 des Messers 15 trägt die Einrastaussparung, die eine abgerundete Nockenfläche 32 aufweist, die mit einer Rastnockenfläche 34 des Zuhaltungsbleches 24 zusammenwirkt. Diese Rastnockenfläche 34 ist derart ausgebildet, daß der Radius im Uhrzeigersinn gemäß Fig. 3 und 4 betrachtet zunimmt, wodurch gewährleistet wird, daß auch beim Auftreten von Schleiftoleranzen die Schere sicher immer in ihrer Schließstellung gehaltert wird. Gemäß dem dargestellten Ausführungsbeispiel ist die Nockenfläche 32 als Kreisbogen ausgebildet, dessen Mittelpunkt 36 jedoch exzentrisch zur Schwenkachse 26 liegt, und wie ersichtlich nach oben versetzt ist, und zwar mit einer Exzentrizität e. Bei einer gegenseitigen Verschwenkung der Scherenschenkel um den Gelenkbolzen 18 verändert auch die Einrastaussparung 28 im Messer 16,30 ihre Lage relativ zum Zuhaltungsblech 24. Da der Berührungsbereich zum Messer in Form eines exzentrischen Rreisbogensegments 34 ausgebildet ist, besteht immer die Möglichkeit die Schere lichtspaltfrei zu verriegeln. Durch die Exzentrizität und der Position der Schwenkachse 26 des Zuhaltungsblechs 24 und im Hinblick auf die Lage der Aussparung 28 wird eine sichere Selbsthemmung des Verriegelungsmechanismus gegen das Öffnungsmoment der Öffnungsfeder 20 gewährleistet.

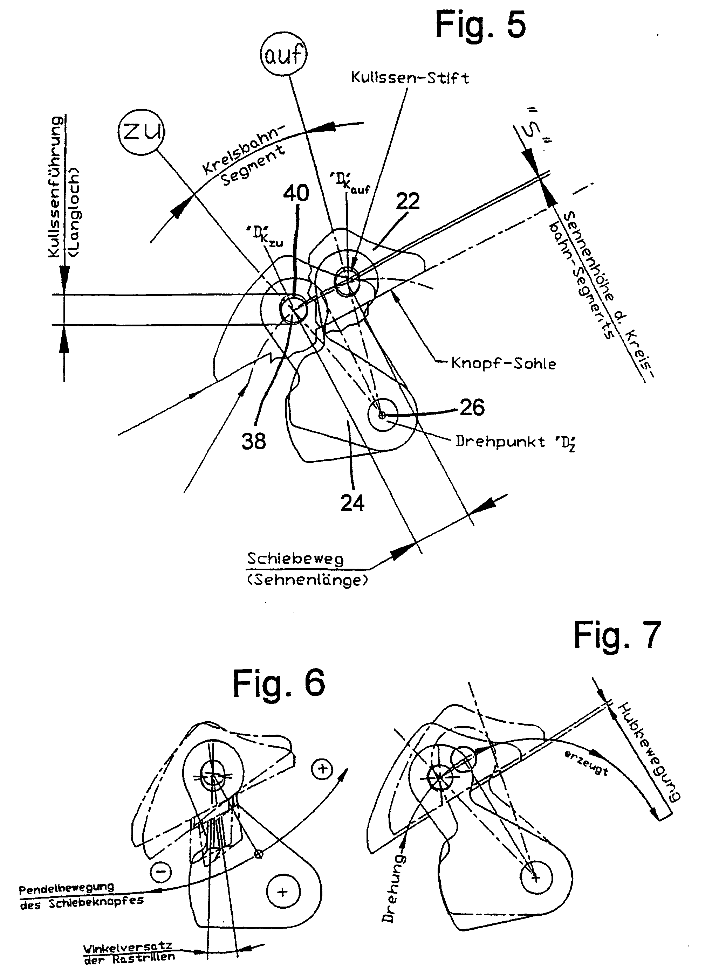

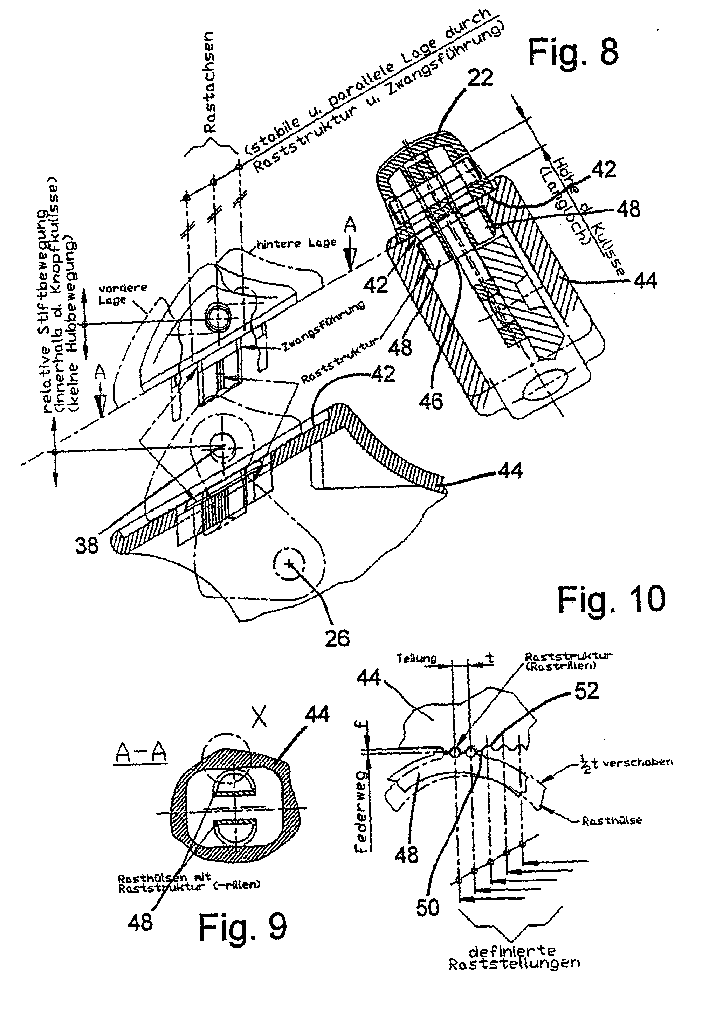

Das Zuhaltungsblech 24 wird durch den Schiebeknopf 22 um die Achse 26 verschwenkt. Zum bequemen Schließen und Öffnen der Verriegelungsvorrichtung soll aus ergonometrischen Gründen der Schiebeknopf 22 eine Linearbewegung statt einer Rotationsbewegung durchführen. Die Verbindung zwischen Schiebeknopf 22 und Zuhaltungsblech 24 erfolgt über einen Stift 38, der im Zuhaltungsblech 24 fixiert ist und in einer als Langloch 40 ausgebildeten Kulissenführung des Schiebekopfs 22 läuft. Dieses Langloch 40 ist so bemessen, daß die Sehnenhöhe des Kreisbahnsegments im Winkelbereich der Bewegung des Zuhaltungsblechs aufgenommen wird. Die Linearbewegung des Schiebeknopfes wird durch eine Zwangsführung 42 gewährleistet, die am besten aus Fig. 8 ersichtlich ist. Wie aus der Schnittdarstellung gemäß Fig. 8 ersichtlich, läuft der Schiebeknopf 22 auf einer Gleitfläche 42 der Griffschale 44 des Scherenschenkels 10. Wie aus den Figuren 5 bis 8 ersichtlich fungiert der Befestigungsstift 38 als Kulissenstift der über das Langloch 40 im Schiebeknopf 22 das Zuhaltungsblech 24 um die Achse 26 verschwenkt. Der Weg, den der Kulissenstift 38 innerhalb des Langloches 40 beschreibt, entspricht der Segmenthöhe des Kreisbahnsegments das die Achse des Stiftes 38 zwischen der Stellung "AUF" und der Stellung "ZU" beschreibt. Damit ist ein Abheben des Schiebeknopfes während des Bewegungsablaufs ausgeschaltet. Die geringe projizierte Oberfläche des Stiftes 38 vermindert außerdem den Abrieb im Schiebeknopf 22. Außerdem wirkt der Stift 38 als Sicherungselement gegen ein Verlieren.

Die Stellung des Schiebeknopfes 22 auf der Gleitfläche 42 der Griffschale 44 könnte reibungsschlüssig festgelegt werden.

Nach einer zweckmäßigen Ausgestaltung der Erfindung ist zur Festlegung der jeweiligen Stellung ein Rastmechanismus vorgesehen, der am besten aus den Figuren 9 und 10 ersichtlich ist. Die Fig. 9 zeigt einen Schnitt nach der Linie A-A während die Fig. 10 in größerem Maßstab die in Fig. 9 mit dem Kreis X bezeichnete Einzelheit deutlicher erkennen läßt. An dem in einen Schlitz der Griffschale 44 einstehenden Fortsatz 46 befinden sich zwei halbrunde Hohlzylinder 48, die elastisch gegen die Innenwand der Griffschale 44 vorgespannt sind. In dem mit den Innenwänden der Griffschale 44 in Berührung kommenden Bereich weisen die Hohlzylinder eine Raststruktur 50 in Form von Rastrillen und Rastrippen auf, und diese Raststruktur wirkt mit einer entsprechenden Raststruktur 52 an der Innenwand der Griffschale zusammen, wie dies aus Fig. 10 ersichtlich ist. Dadurch ergeben sich eindeutig definierte Raststellungen und der Schiebeknopf 22 ist daran gehindert unbeabsichtigt auf der Gleitfläche 42 verschoben zu werden. Diese Raststruktur ergibt exakt definierte Raststellungen, wodurch ein sicheres Öffnen und Schließen der Schere gewährleistet wird. Wie aus Fig. 8 ersichtlich unterstützt die Raststruktur 50,52 die achsparallele und stabile Lage des Knopfes während des Schiebens und in Ruhelage. Die zwangsführung des Knopfes in dem schlitzförmigen Einschnitt der Griffschale 44 bedingt zudem einen genau definierten Bewegungsspielraum für das Verbindungselement, d.h. für den Stift 38.

### Bezugszeichenliste

- 10: 1. Scherenschenkel
- 12: Amboß
- 14: 2. Scherenschenkel
- 16: Messer
- 18: Gelenkbolzen
- 20: Öffnungsfeder
- 22: Schiebeknopf
- 24: Zuhaltungsblech
- 26: Achse
- 28: Einrastaussparung
- 30: rückw. Teil des Messers 16
- 32: Nockenfläche
- 34: Rastnockenfläche
- 36: Mittelpunkt
- 38: Stift
- 40: Langloch
- 42: Gleitfläche
- 44: Griffschale
- 46: Fortsatz
- 48: Hohlzylinder
- 50: Raststruktur
- 52: Raststruktur

## Patentansprüche

1. Verriegelungsvorrichtung für Gartenscheren mit einem durch Hand betätigbaren Schiebeknopf (22) und einer von diesem betätigbaren Zuhaltung (24), die die Scherenschenkel (10, 14) in Schließstellung entgegen der Kraft einer Öffnungsfeder (20) sperrt,
**dadurch gekennzeichnet, daß** die an dem einen Scherenschenkel (10) schwenkbar angelenkte Zuhaltung eine Nockenfläche (34) aufweist, die mit einer Rast-Nockenfläche (32) eines Teils (30) des anderen Scherenschenkels (14) zusammenwirkt, und daß die Nockenflächen (34, 32) im Schließbereich selbsthemmend aneinanderliegen und der Radius wenigstens einer Nockenfläche (34) über die jeweilige Schließstellung zunimmt.

2. Verriegelungsvorrichtung nach Anspruch 1,
**dadurch gekennzeichnet, daß** an dem einen Schenkelteil (30) eine Einrastaussparung (28) mit einer ersten Nockenfläche (32) angeordnet ist, die mit einer weiteren Nockenfläche (34) der Zuhaltung (24) zusammenwirkt, wobei die weitere Nockenfläche in Form eines exzentrischen Kreisbogensegmentes (34) ausgebildet ist.

3. Verriegelungsvorrichtung nach Anspruch 2,
**dadurch gekennzeichnet, daß** die Nockenfläche (32) kreisbogenförmig ausgebildet ist, dessen Mittelpunkt (36) exzentrisch zur Schwenkachse (26) der Zuhaltung (24) angeordnet ist.

4. Verriegelungsvorrichtung nach Anspruch 1,
**dadurch gekennzeichnet, daß** die Zuhaltung (24) mit einem Ansatz durch einen Schlitz der Griffschalge (44) des einen Scherenschenkels (10) nach außen vorsteht und dort mit einem linear beweglichen Schiebeknopf (22) gekuppelt ist.

5. Verriegelungsvorrichtung nach Anspruch 4,
**dadurch gekennzeichnet, daß** zur Kupplung zwischen Zuhaltung (24) und Schiebeknopf (22) ein Stift (38) vorgesehen ist, der in einem Loch der Zuhaltung (24) eingesetzt ist und in eine Langloch-Kulissenführung (40) des Schiebeknopfes (22) eingreift.

6. scheren-Veriegelungsvorrichtung nach den Ansprüchen 4 und 5, **dadurch gekennzeichnet, daß** der Schiebeknopf (22) in einer Führungsbahn der Griffschale (44) formschlüssig nach außen abgestützt verschiebbar ist.

7. Scheren-Verriegelungsvorrichtung nach einen der Ansprüche 1 bis 6, **dadurch gekennzeichnet, daß** zwischen Schiebeknopf (22) und seiner Führungsbahn in der Griffschale (44) eine Feinraststruktur angeordnet ist, durch die definierte Raststellungen gebildet werden.

8. Scheren-Verriegelungsvorrichtung nach Anspruch 7,
**dadurch gekennzeichnet, daß** der Schiebeknopf (22) an einem in die Führungsbahn der Griffschale einstehenden Fortsatz (46) mit elastischen, hohlzylindrischen Rasthülsen (48) ausgestattet ist, die mit einer Raststruktur (52) der Führungsbahn der Griffschalen (44) zusammenwirken.

9. Scheren-Verriegelungsvorrichtung nach den Ansprüchen 7 und 8, **dadurch gekennzeichnet, daß** die Raststruktur (50,52) von wellenförmig angeordneten Rastrillen bzw. Rastrippen gebildet ist.

## Claims

1. Locking device for garden pruners, having a slide-action button (22) adapted to be operated manually and a follower (24) which is adapted to be operated by the latter and which locks the legs (10, 14) of the pruner in the closed position against the force of an opening spring (20),
**characterised in that** the follower, hinged so as to swivel on one leg (10) of the pruner, incorporates a cam surface (34) which cooperates with a locking cam surface (32) on one portion (30) of the other leg (14) of the pruner, and that the cam surfaces (34, 32) rest against one another in a self-interlocking fashion in the closure range and the radius of at least one cam surface (34) increases over the respective closure position.

2. Locking device according to claim 1,
**characterised in that** arranged on one leg portion (30) is a latching recess (28) with a first cam surface (32) which cooperates with a further cam surface (34) on the follower (24), the further cam surface being configured in the form of an eccentric arc-of-circle segment (34).

3. Locking device according to claim 2,
**characterised in that** the cam surface (32) is configured as an arc of a circle whose mid-point (36) is disposed eccentrically to the swivelling axis (26) of the follower (24).

4. Locking device according to claim 1,
**characterised in that** the follower (24) juts outwards by a heel through a slot in the grip area (44) of one leg pruner leg (10) and is there coupled to a linearly movable slide-action button (22).

5. Locking device according to claim 4,
**characterised in that** for coupling the follower (24) and the slide-action button (22) together, a pin (38) is provided which is set in a hole in the follower (24) and engages in a slotted gate-type guide (40) in the slide-action button (22).

6. Pruner locking device according to claims 4 and 5,
**characterised in that** the slide-action button (22) is adapted to be displaced in a guideway on the grip area (44), positively supported outwardly.

7. Pruner locking device according to any of claims 1 to 6, **characterised in that** arranged between the slide-action button (22) and its guideway in the grip area (44) is a precision-latching structure which forms defined locking positions.

8. Pruner locking device according to claim 7,
**characterised in that** on a continuation piece (46) which projects into the guideway of the grip area, the slide-action button (22) is equipped with flexible, hollow cylindrical locking sleeves (48) which cooperate with a latching structure (52) on the guideway of the grip areas (44).

9. Pruner locking device according to claims 7 and 8,
**characterised in that** the latching structure (50, 52) is constituted by latching grooves and latching fins, respectively, arranged in a wavy formation.

## Revendications

1. Dispositif de verrouillage pour sécateurs avec un bouton coulissant (22) pouvant être actionné à la main et une gâchette (24) pouvant être actionnée par ce bouton, qui bloque les branches de cisaille (10, 14) dans la position de fermeture dans le sens contraire à la force d'un ressort d'ouverture (20),
**caractérisé en ce que** la gâchette articulée de façon pivotante sur une branche de cisaille (10) présente une surface de came (34) qui coopère avec une surface de came d'arrêt (32) d'une partie (30) de l'autre branche de cisaille (14), et **en ce que** les surfaces de came (34, 32) sont contiguës les unes aux autres de façon autobloquante dans la zone de fermeture et le rayon d'au moins une surface de came (34) augmente en fonction de la position de fermeture respective.

2. Dispositif de verrouillage selon la revendication 1,
**caractérisé en ce que** sur une partie de branche (30) est disposé un évidemment d'encliquetage (28) avec une première surface de came (32), qui coopère avec une autre surface de came (34) de la gâchette (24), l'autre surface de came étant conçue sous la forme d'un segment excentré d'arc de cercle (34).

3. Dispositif de verrouillage selon la revendication 2,
**caractérisé en ce que** la surface de came (32) est conçue en forme d'arc de cercle, dont le centre (36) est disposé de façon excentré par rapport à l'axe de pivotement (26) de la gâchette (24).

4. Dispositif de verrouillage selon la revendication 1,
**caractérisé en ce que** la gâchette (24) déborde vers l'extérieur avec un appendice à travers une fente de la coque de poignée (44) d'une branche de cisaille (10) et est couplée à cet endroit avec un bouton coulissant (22) mobile dans le sens linéaire.

5. Dispositif de verrouillage selon la revendication 4,
**caractérisé en ce qu'**il est prévu pour le couplage entre la gâchette (24) et le bouton coulissant (22) une broche (38) qui est insérée dans un trou de la gâchette (24) et s'engage dans un guide de coulisse à trou oblong (40) du bouton coulissant (22).

6. Dispositif de verrouillage de cisaille selon les revendications 4 et 5, **caractérisé en ce que** le bouton coulissant (22) peut être déplacé par conjugaison de forme dans une trajectoire de guidage de la coque de poignée (44) en étant soutenu vers l'extérieur.

7. Dispositif de verrouillage de cisaille selon l'une quelconque des revendications 1 à 16, **caractérisé en ce qu'**entre le bouton coulissant (22) et sa trajectoire de guidage dans la coque de poignée (44) est disposée une structure à crantage fin, grâce à laquelle sont constituées des positions de crantage définies.

8. Dispositif de verrouillage de cisaille selon la revendication 7, **caractérisé en ce que** le bouton coulissant (22) est équipé, sur un appendice (46) s'engageant dans la trajectoire de guidage de la coque de poignée, de douilles d'arrêt (48) élastiques et en forme de cylindres creux, qui coopèrent avec une structure d'arrêt (52) de la trajectoire de guidage des coques de poignée (44).

9. Dispositif de verrouillage de cisaille selon les revendications 7 et 8, **caractérisé en ce que** la structure d'arrêt (50, 52) est formée par des rainures ou nervures d'arrêt disposées en forme de vague.
